# EUROPÄISCHE PATENTSCHRIFT

(11) **EP 2 072 965 B1**
(45) Veröffentlichungstag und Bekanntmachung des Hinweises auf die Patenterteilung: **01.07.2015**
(21) Anmeldenummer: 08012745.9
(22) Anmeldetag: 15.07.2008
(51) Int. Cl.: G01D 5/347

(54) **Positionsmesseinrichtung und Verfahren zur absoluten Positionsbestimmung**
Position measuring device and method for determining an absolute position
Dispositif de mesure de position et procédé de détermination de la position absolue

(30) Priorität: 19.12.2007 DE 102007061287
(43) Veröffentlichungstag der Anmeldung: 24.06.2009
(73) Patentinhaber: Dr. Johannes Heidenhain GmbH, 83301 Traunreut (DE)
(72) Erfinder: Oberhauser, Johann, 83377 Vachendorf (DE); Schürmann, Thomas, 83022 Rosenheim (DE)

(56) Entgegenhaltungen:
- EP-A2- 1 821 073
- DE-A1- 3 825 097
- DE-A1- 3 942 625
- DE-A1- 10 244 235

## Beschreibung

Die Erfindung betrifft eine Positionsmesseinrichtung zur Bestimmung der absoluten Position nach dem Oberbegriff des Anspruchs 1, sowie ein Verfahren zur absoluten Positionsbestimmung nach dem Oberbegriff des Anspruchs 14.

In vielen Gebieten werden vermehrt absolute Positionsmesseinrichtungen eingesetzt, bei denen die absolute Positionsinformation aus einer Codespur mit in Messrichtung hintereinander angeordneten Codeelementen abgeleitet wird. Die Codeelemente sind dabei in pseudozufälliger Verteilung vorgesehen, so dass eine bestimmte Anzahl von aufeinander folgenden Codeelementen jeweils ein Bitmuster bildet. Bei der Verschiebung der Abtasteinrichtung gegenüber der Codespur um ein einziges Codeelement wird bereits ein neues Bitmuster gebildet und über den gesamten absolut zu erfassenden Messbereich steht eine Folge von unterschiedlichen Bitmustern zur Verfügung.

Ein derartiger sequentieller Code wird als Kettencode oder als Pseudo-Random-Code (PRC) bezeichnet. Eine besonders störsichere Variante eines Pseudo-Random-Codes ergibt sich, wenn die Codeelemente eine so genannte Manchestercodierung aufweisen, das bedeutet, dass die Codeelemente zwei gleich große Teilbereiche aufweisen, die zueinander komplementäre Eigenschaften aufweisen. Die binäre Information ist hier durch die Abfolge der Teilbereiche festgelegt.

In der DE10244235A1 wird eine gattungsgemäße Positionsmesseinrichtung beschrieben, deren absolute Codespur aus einer pseudo-zufälligen Anordnung von Codeelementen besteht, die eine Manchester-Codierung aufweisen. Zur Feststellung, ob die Abtastsignale von Detektorelementen für die Auswertung der Positionsinformation gültige Werte aufweisen, wird zum einen vorgeschlagen, Abtastsignale einer Inkrementalspur, die zur absoluten Codespur parallel verläuft, zur Auswahl der zur Auswertung der Absolutspur nötigen Detektorelemente zu nutzen. Zum anderen wird angeregt, zur Bewertung der Zuverlässigkeit der Detektorsignale die Detektorelemente in eine Gruppe mit geradzahlig nummerierten und eine Gruppe mit ungeradzahlig nummerierten Detektorelementen aufzuteilen und jeweils Differenzsignale direkt aufeinander folgender Detektorelemente jeder Gruppe zu bilden und mit einem Vergleichswert zu vergleichen. Der Positionswert wird schließlich aus den gültigen Abtastsignalen, die aus dem Vergleich resultieren, gebildet.

Ein weit verbreitetes Funktionsprinzip ist die optische Abtastung. Dabei wird eine Messteilung, die auf einer Maßverkörperung aufgebracht ist, mit gerichtetem Licht, das von einer Lichtquelle abgestrahlt wird, auf eine Anzahl von Photodetektoren abgebildet. Die Maßverkörperung ist beweglich im Strahlengang des Lichts angeordnet und moduliert das Licht, wenn die Messteilung relativ zur Lichtquelle und den Photodetektoren bewegt wird. Die Positionsinformation wird durch Auswertung der Ausgangssignale der Photodetektoren ermittelt. Je nachdem, ob es sich um ein rotatorisches oder lineares Positionsmessgerät handelt, ist die Maßverkörperung eine kreisrunde Teilungsscheibe oder ein linearer Maßstab. Die Messteilung kann aus einer oder mehreren Spuren mit Bereichen mit unterschiedlichen optischen Eigenschaften wie z.B. transparent/opak oder reflektierend/nicht reflektierend, bestehen.

Absolute Positionsmessgeräte, deren Codespur als PRC ausgebildet ist, benötigen für das Ablesen der Codeelemente eine große Anzahl von Detektorelementen, die in einem genau festgelegten Abstand, der von den abzulesenden Codeelementen abhängig ist, zueinander angeordnet sind. Bevorzugt werden die Detektorelemente als Detektorarray auf einem Halbleiterchip zusammengefasst. Besonders problematisch ist es bei einem derartigen optischen Abtastprinzip, dass die Zuverlässigkeit des Ablesens der Codespur von der Genauigkeit der Abbildung des für das Ablesen relevanten Teils der Codespur auf das Detektorarray abhängt. Diese ist von der geometrischen Anordnung von Lichtquelle, Codespur und Detektorelementen abhängig. Weicht beispielsweise die Ausrichtung des Lichts von der geforderten, durch die Codespur und dem Detektorarray festgelegten, ab, so erhalten nicht alle Detektorelemente, die zur Ermittlung der aktuellen Position verwendet werden, die gleiche Lichtmenge. Dadurch können undefinierte Zustände auftreten und es kann sogar zur Ermittlung falscher Positionswerte kommen.

Der Erfindung liegt die Aufgabe zugrunde, eine Positionsmesseinrichtung mit verbesserter Zuverlässigkeit bzw. Betriebssicherheit zu schaffen. Weiter liegt der Erfindung die Aufgabe zugrunde, ein Verfahren zur absoluten Positionsbestimmung anzugeben, das eine verbesserte Zuverlässigkeit bzw. Betriebssicherheit aufweist.

Hinsichtlich der Positionsmesseinrichtung wird diese Aufgabe wird durch die Merkmale des Anspruches 1 gelöst.

Es wird eine Positionsmesseinrichtung vorgeschlagen, mit einem Code und einer Abtasteinheit. Der Code besteht aus einer Folge von in einer Messrichtung hintereinander angeordneten Codeelementen, wobei wenigstens zwei aufeinander folgende Codeelemente jeweils ein Codewort mit einer Positionsinformation bilden. Die Abtasteinheit umfasst eine Beleuchtungseinheit zum Aussenden von gerichtetem Licht in Richtung des Codes zur Abbildung wenigstens der Codewort bildenden Codeelemente auf eine Detektoreinheit,
wobei die Detektoreinheit in Messrichtung wenigstens zwei Detektorelemente je Codewort bildendem Codeelement aufweist, sowie eine Auswerteeinheit, in der aus den Detektorsignalen der Detektorelemente das Codewort mit der aktuellen Positionsinformation ermittelbar ist. Die Abtasteinheit und der Code sind in Messrichtung relativ zueinander beweglich angeordnet. Die Erfindung ist dadurch gekennzeichnet, dass in der Auswerteeinrichtung die zur Bildung des Codeworts auszuwertenden Detektorsignale in Abhängigkeit von der Abbildung der Codewort bildenden Codeelemente auf die Detektoreinheit auswählbar sind.

Ein erfindungsgemäßes Verfahren zur absoluten Positionsbestimmung ist durch die Merkmale des Anspruchs 14 bestimmt.

Vorteilhafte Ausgestaltungen der Erfindung sind jeweils in den vom Anspruch 1 bzw. 14 abhängigen Ansprüchen angegeben.

Die Erfindung wird anhand der Zeichnungen näher erläutert, dabei zeigt
- Figur 1a: eine Positionsmesseinrichtung in schematischer Darstellung,
- Figur 1b: eine Positionsmesseinrichtung in schematischer Darstellung mit fehljustierter Beleuchtungseinheit,
- Figur 2: ein Blockdiagramm einer Auswerteeinheit einer erfindungsgemäßen Positionsmesseinrichtung,
- Figur 3a: die Auswahl der Detektorsignale in einer erfindungsgemäßen Positionsmesseinrichtung bei parallel ausgerichtetem Licht,
- Figur 3b: die Auswahl der Detektorsignale in einer erfindungsgemäßen Positionsmesseinrichtung bei konvergent ausgerichtetem Licht,
- Figur 3c: die Auswahl der Detektorsignale in einer erfindungsgemäßen Positionsmesseinrichtung bei divergent ausgerichtetem Licht und
- Figur 4: ein Zeigerdiagramm des Feinpositionswerts.

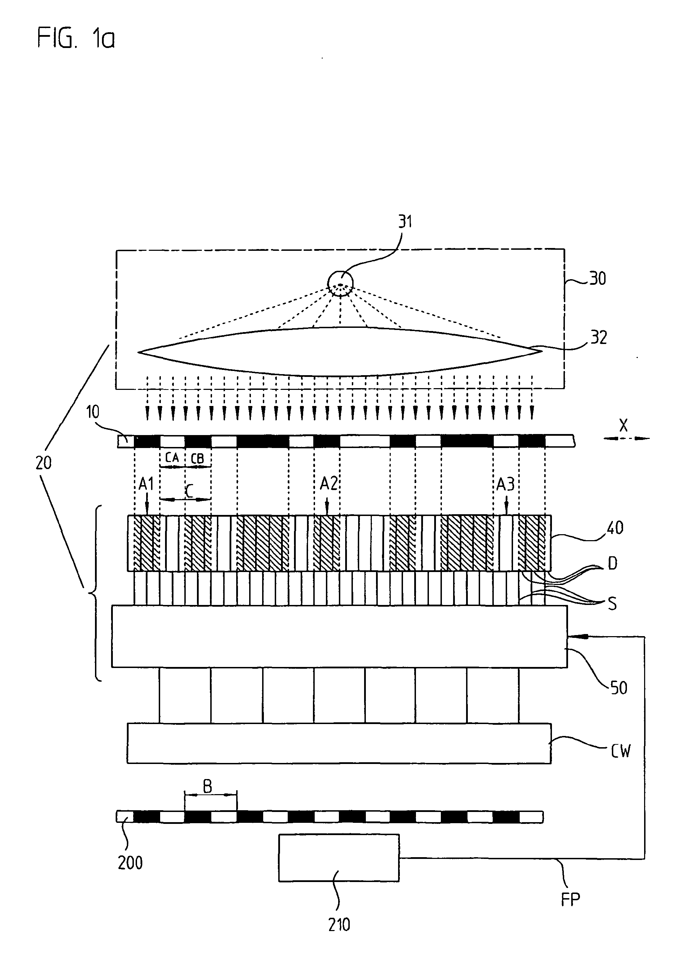

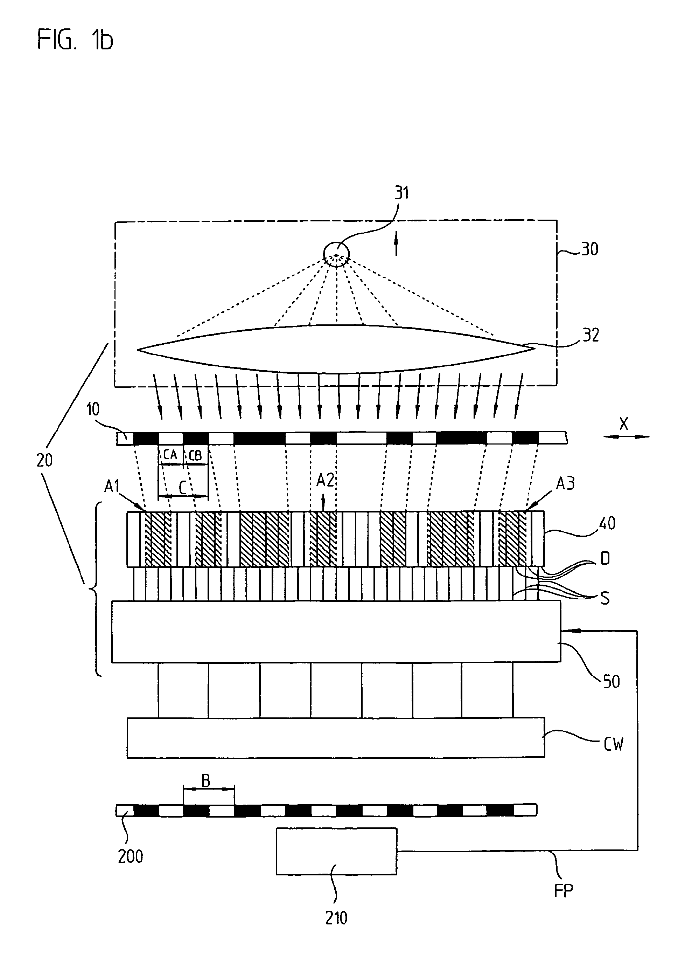

Anhand der Figuren 1 a und 1 b soll zunächst weiter verdeutlicht werden, wie die Ausrichtung des zum Ablesen eines Codes verwendeten Lichts die Zuverlässigkeit der Positionswertermittlung beeinflussen kann. Figur 1 a zeigt schematisch eine optische Positionsmesseinrichtung, bei der ein Code 10 mittels einer Abtasteinheit 20, die eine Beleuchtungseinheit 30, eine Detektoreinheit 40 und eine Auswerteeinheit 50 umfasst, abgetastet wird. Der Code 10 ist auf einer Maßverkörperung aufgebracht. Je nachdem, ob die Positionsmesseinrichtung zur Messung von linearen oder rotatorischen Positionen dient, kann es sich bei der Maßverkörperung beispielsweise um einen Maßstab oder um eine Codescheibe handeln.

Der Code 10 besteht aus einer in Messrichtung X hintereinander angeordneten Folge von gleich langen Codeelementen C, wobei die Positionsinformation durch die optischen Eigenschaften der Codeelemente C codiert ist. Ein derartiger Code 10 wird auch als "Pseudo Random Code" oder abgekürzt "PRC" bezeichnet. Die Codierung kann beispielsweise dadurch erreicht werden, dass die Codeelemente C zueinander komplementär ausgebildet sind. Komplementär bedeutet dabei, dass sie inverse optische Eigenschaften besitzen, also im Falle der dargestellten Durchlichtabtastung beispielsweise transparent und nicht transparent bzw. bei Auflicht-Abtastung reflektierend bzw. nicht reflektierend sind.

Besonders vorteilhaft ist es, wenn der Code 10, wie dargestellt, eine so genannte Manchestercodierung aufweist. Hier bestehen die Codeelemente C aus zwei in Messrichtung hintereinander angeordneten Teilbereichen CA, CB mit komplementär ausgebildeten optischen Eigenschaften. Der digitale Wert eines solchen Codeelements C ist durch die Anordnung der Teilbereiche CA, CB festgelegt. Einer ersten Abfolge der komplementär zueinander ausgebildeten Teilbereiche CA, CB wird also ein erster digitaler Wert und einer zweiten Abfolge der komplementär zueinander ausgebildeten Teilbereiche CA, CB wird ein zweiter digitaler Wert zugeordnet. Beispielsweise wird der Abfolge opak → transparent der Wert "0" und der Abfolge transparent → opak der Wert "1" zugeordnet.

Die Beleuchtungseinheit 30 besteht aus einer Lichtquelle 31 und einer Kollimatorlinse 32. Sie sendet gerichtetes Licht in Richtung des Codes 10 aus. Mit Vorteil weist das Licht, wie in Figur 1 a dargestellt, einen parallelen Strahlenverlauf auf. Entsprechend der Ausrichtung des Lichts wird der Code 10 auf die Detektoreinheit 40 abgebildet.

Die Detektoreinheit 40 ist ein Zeilensensor mit einer in Messrichtung X angeordneten Folge von Detektorelementen D. Um die Abbildung des Codes 10 auf die Detektoreinheit 40 besser darstellen zu können, ist die Detektoreinheit 40, deren Oberfläche eigentlich der Beleuchtungseinheit 30 zugewandt ist, in die Bildebene gedreht dargestellt. Abgeschattete Bereiche sind schraffiert gezeichnet. In der dargestellten Relativposition kennzeichnet der Pfeil A1 beispielhaft ein Detektorelement D, das für das Auslesen der Codeinformation im linken Bereich der Detektoreinheit 40 besonders gut geeignet ist. Gleichermaßen kennzeichnen die Pfeile A2 und A3 je ein Detektorelement im mittleren, bzw. rechten Bereich der Detektoreinheit 40.

Die Detektorsignale S sind der Auswerteeinheit 50 zugeführt, die ein Codewort CW ermittelt, das die aktuelle Relativposition zwischen dem Code 10 und der Abtasteinheit 20 angibt.

Die Breite der Detektorelemente D entspricht einem Viertel der Breite eines Codeelements C. Da zum Feststellen des Wertes eines Codeelements C die beiden Teilbereiche CA, CB abgelesen werden müssen, befinden sich bei einer Relativbewegung der Abtasteinheit 20 gegenüber dem Code 10 in Messrichtung X nacheinander vier Detektorpaare in der optimalen Position zum Ablesen der Positionsinformation. Wird die Bewegung fortgeführt, so wiederholt sich der Vorgang zyklisch mit den darauf folgenden Codeelementen C. Um festzustellen, welches Detektorpaar zum Auslesen der Wertes eines Codeelements C jeweils verwendet werden soll, schlägt die DE10244235A1 bereits vor, parallel zum Code 10 eine Inkrementalspur 200 anzuordnen. Die Inkrementalspur 200 dient weiter dazu, einen Feinpositionswert FP zu erzeugen, der in Verbindung mit dem Codewort CW die Auflösung des Positionsmessgeräts erhöht. Hierbei ist es besonders vorteilhaft, wenn die Inkrementalspur 200 so ausgeführt ist, dass ihre periodische Teilung eine Periodenlänge B entsprechend der Länge eines Codeelements C des Codes 10 aufweist. In diesem Fall kann durch eine einfache 4-fach Interpolation ein Feinpositionswert FP erzeugt werden, mit dem die Auswahl der an der aktuellen Relativposition optimal positionierten Detektorpaare getroffen werden kann. Dieser Feinpositionswert FP kann mit 2 Bit codiert werden. Um jedoch die Auflösung des Positionsmessgerätes signifikant erhöhen zu können, werden in der Praxis höhere Interpolationsfaktoren eingesetzt, beispielsweise weist ein Feinpositionswert FP eine Auflösung von 8 Bit auf. Zur Auswahl der an der aktuellen Relativposition optimal positionierten Detektorpaare können in diesem Fall die beiden höherwertigen Bits des Feinpositionswerts FP herangezogen werden.

Aufbau und Auswertung von Inkrementalspuren 200 sind im Stand der Technik weit verbreitet und nicht teil dieser Anmeldung. Aus diesem Grund ist für die Erzeugung des Feinpositionswerts FP lediglich vereinfacht eine Feinpositions-Auswerteeinheit 210 dargestellt. Diese umfasst sowohl die zur Abtastung der Inkrementalspur 200 notwendigen Detektoren, als auch die Signalverarbeitung und Interpolation. Im vorliegenden Ausführungsbeispiel wird bevorzugt ein optisches Abtastprinzip verwendet und die Inkrementalspur 200 ist parallel zum Code 10 auf der selben Maßverkörperung angeordnet.

Die Ausrichtung des von der Beleuchtungseinheit 30 abgegebenen Lichts ist unter anderem von ihrem geometrischen Aufbau, insbesondere dem Abstand der Lichtquelle 31 von der Kollimatorlinse 32, bestimmt. Figur 1b zeigt die Positionsmesseinrichtung von Figur 1 a mit einer Beleuchtungseinheit 30, die durch eine Fehljustierung - ein größerer Abstand zwischen Lichtquelle 31 und Kollimatorlinse 32 - weitgehend konvergent ausgerichtetes Licht abstrahlt. Als Folge davon ist das mit dem Pfeil A1 bestimmte Detektorelement D bereits teilweise beleuchtet, während es in Figur 1 a noch vollständig abgeschattet war. Das mit dem Pfeil A3 gekennzeichnete Detektorelement D im rechten Bereich der Detektoreinheit 40 ist dagegen bereits teilweise abgeschattet. Das mit dem Pfeil A2 gekennzeichnete Detektorelement D im mittleren Bereich ist weiterhin abgeschattet, da die konvergente Ausrichtung des Lichts hier nur schwach auswirkt. Folge der Fehljustierung der Beleuchtungseinheit 30 ist somit eine veränderte Signalamplitude der Detektorsignale S in den äußeren Bereichen der Detektoreinheit 40, die eine Fehlablesung des Codes 10 hervorrufen kann.

Analog hierzu würde eine Beleuchtungseinheit 30, bei der die Lichtquelle 31 näher an der Kollimatorlinse 32 angeordnet ist, weitgehend divergentes Licht abstrahlen.

Die Abbildung des Codes 10 auf die Detektoreinheit 40 kann selbstverständlich auch durch andere Ursachen beeinflusst werden, beispielsweise durch eine ungenaue Ausrichtung der Abtasteinheit 20 zum Code 10. Auch hier ist die vorliegende Erfindung einsetzbar.

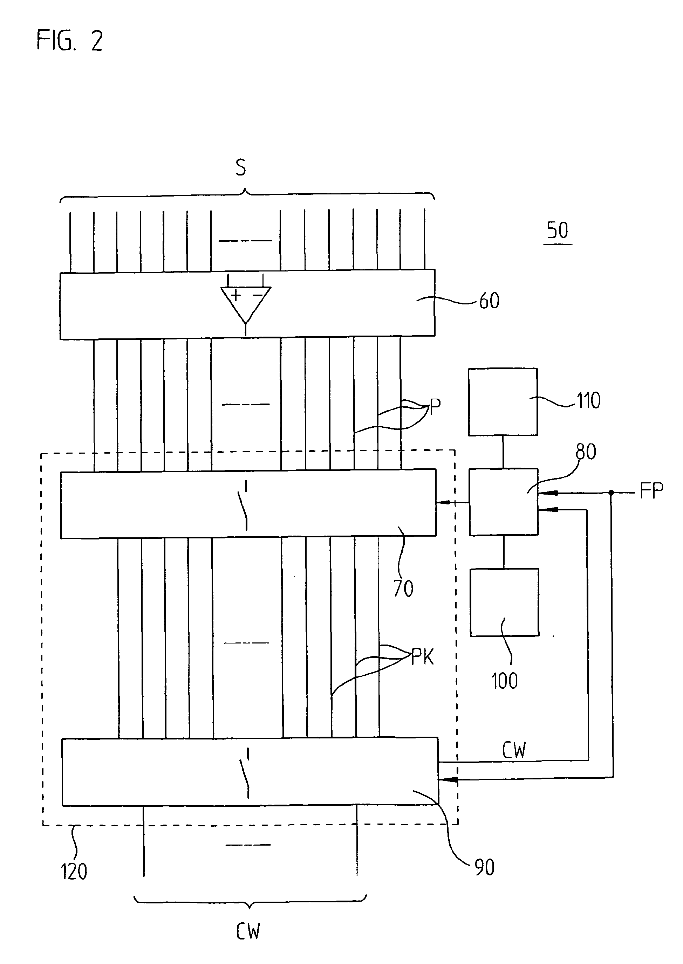

Figur 2 zeigt ein Blockdiagramm einer Auswerteeinheit 50 einer erfindungsgemäßen Positionsmesseinrichtung. Der Auswerteeinheit 50 sind eingangsseitig die Detektorsignale S der Detektoreinheit 40 zugeführt. Sie gibt ein Codewort CW aus, das die Relativposition zwischen dem Code 10 und der Abtasteinheit 20 in Messrichtung X angibt.

Die Auswerteeinheit 50 umfasst eine Signalverarbeitungseinheit 60, eine Auswahleinheit 70, die von einer Korrektureinheit 80 steuerbar ist, und eine Codewort-Ermittlungseinheit 90. Darüber hinaus ist der Auswerteeinheit 50 der Feinpositionswert FP zugeführt. Somit verfügt die Auswerteeinheit 50 über eine Information zur Relativposition innerhalb der vom Code 10 bestimmten Absolutposition.

Die Signalverarbeitungseinheit 60 dient dazu, aus den Detektorsignalen S, bei denen es sich bei optischer Abtastung meist um Stromsignale mit niedrigen Signalamplituden handelt, digitale Positionssignale, vorzugsweise Spannungssignale mit definierten Pegeln, zu generieren. Handelt es sich beim abgetasteten Code 10 beispielsweise um einen einfachen PRC, so kann dies mit Stromkomparatoren erreicht werden, die so dimensioniert sind, dass unterhalb einer Triggerschwelle ein logisches Low-Signal und oberhalb der Triggerschwelle ein logisches High-Signal ausgegeben wird.

Bevorzugt wird als Code 10 ein PRC eingesetzt, der eine Manchestercodierung aufweist. Wie bereits in der DE10244235A1 beschrieben, können hier zur Verarbeitung der Detektorsignale S Triggerbausteine eingesetzt werden, die, je nach Signaldifferenz von Detektorsignalpaaren an den Eingängen, am Ausgang ein High- bzw. ein Low-Signal ausgeben. Durch die Auswertung der Signaldifferenz wird ein hoher Störabstand erreicht. Weiter wird vorgeschlagen, den Signalpegel der Signaldifferenz in Fehlerprüfeinrichtungen betragsmäßig mit einer definierten Triggerschwelle zu vergleichen und bei deren Unterschreitung ein Fehlersignal auszugeben. Am Ausgang der Signalverarbeitungseinheit 60 stehen somit Positionssignale P zur Verfügung, die drei definierte Zustände annehmen können: High-Signal, Low-Signal und Fehlersignal.

Die Positionssignale P am Ausgang der Signalverarbeitungseinheit 60 sind der Auswahleinheit 70 zugeführt. Diese schaltet, gesteuert von der Korrektureinheit 80, aus den Positionssignalen P ausgewählte korrigierte Positionssignale PK zur weiteren Auswertung zur Codewort-Ermittlungseinheit 90 durch.

Die Auswahl der korrigierten Positionssignale PK aus den Positionssignalen P erfolgt mit Hilfe des Feinpositionswerts FP und einer Korrekturinformation. Dabei beinhaltet der Feinpositionswert FP die Information, welche korrigierten Positionssignale PK bei einem optimalen Aufbau der Positionsmesseinrichtung von der Codewort-Ermittlungseinheit 90 durchgeschaltet bzw. als Codewort CW ausgegeben werden. Darüber hinaus bildet der Feinpositionswert FP die Ausgangsinformation für die Auswahl der korrigierten Positionssignale PK aus den Positionssignalen P. Hierzu ermittelt die Korrektureinheit 80 mit Hilfe der Korrekturinformation und dem Feinpositionswert FP die korrekte Zuordnung zwischen den Positionssignalen P und den korrigierten Positionssignalen PK und schaltet die Schalteinheit 70 entsprechend durch.

Die Korrekturinformation kann verschiedene Fehlerursachen umfassen, die eine Korrektur erforderlich machen. Sie ist abhängig von der Lage der Detektoren D in der Detektoreinheit 40, aus deren Detektorsignalen S die Positionssignale P resultieren.

Im einfachsten Fall umfasst die Korrekturinformation eine statische Zuordnungsinformation, die während eines Kalibriervorgangs nach dem Zusammenbau der Positionsmesseinrichtung ermittelt wird. Sie umfasst die Information, wie weit die Abbildung des Codes 10 auf die Detektoreinheit 40 abhängig von der Lage des Detektors D in der Detektoreinheit 40 verschoben ist. Für die Speicherung der statischen Zuordnungsinformation ist in der Auswerteeinheit 50 beispielsweise eine Speichereinheit 100 vorgesehen, die von der Korrektureinheit 80 lesbar ist. Dabei kann für jeden Detektor D der Detektoreinheit 40 eine statische Zuordnungsinformation vorhanden sein, es können aber auch jeweils mehrere benachbarte Detektoren D zu einer Gruppe zusammengefasst sein, der eine gemeinsame statische Zuordnungsinformation zugewiesen ist. Mit Vorteil existiert jeweils für Gruppen von Detektoren D, die für das Auslesen eines Bits des Codeworts CW in Frage kommen, eine gemeinsame statische Zuordnungsinformation.

Bedingt durch den mechanischen Aufbau der Positionsmesseinrichtung, insbesondere durch mechanische Toleranzen in der Führung der Abtasteinheit 20 gegenüber dem Code 10, kann die Korrekturinformation für die Auswahl der korrigierten Positionssignale PK aus den Positionssignalen P eine positionsabhängige Zuordnungsinformation umfassen. Diese berücksichtigt somit auch die Änderung der Abbildung des Codes 10 auf die Detektoreinheit 40 abhängig von der Absolutposition. In diesem Fall sind in der Speichereinheit 100 abhängig von der Absolutposition wenigstens zwei Zuordnungsinformationen, die wiederum je Detektor D oder auch je Gruppe von Detektoren D vorliegen können, speicherbar und die Auswahl der korrigierten Positionssignale PK erfolgt abhängig von der aktuellen Absolutposition des Codes 10 zur Abtasteinheit 20. Hierzu ist der Korrektureinheit 80 das Codewort CW zugeführt. Die Korrektureinheit 80 kann nun in Abhängigkeit vom Codewort CW die für die aktuelle Position gültige Zuordnungsinformation je Detektor, bzw. Detektorgruppe aus dem Speicher 100 auslesen und die Auswahleinheit 70 entsprechend schalten.

In der Praxis hat sich gezeigt, dass die Zuordnung der Positionssignale P zu den korrigierten Positionssignalen PK eine Temperaturabhängigkeit aufweisen kann. Deshalb kann die Korrekturinformation auch eine temperaturabhängige Zuordnungsinformation umfassen. In einer besonders vorteilhaften Ausgestaltung ist deshalb wenigstens ein Temperatursensor 110 vorgesehen, der die Temperatur an wenigstens einer für die Auswahl der korrigierten Positionssignale PK relevanten Stelle im Positionsmessgerät misst und den Temperaturwert zur Korrektureinheit 80 übermittelt. Die Korrektureinheit 80 kann nun, beispielsweise ausgehend von einer in der Speichereinheit 100 abgelegten und für eine Bezugstemperatur gültigen statischen Zuordnungsinformation, die Zuordnung der Positionssignale P zu den korrigierten Positionssignalen PK in Abhängigkeit von der Temperatur des Temperatursensors 110 korrigieren und die Auswahleinheit 70 entsprechend schalten.

Die Codewort-Ermittlungseinheit 90 ermittelt aus den korrigierten Positionssignalen PK das Codewort CW. Die Ermittlung des Codeworts CW erfolgt durch die Auswahl derjenigen korrigierten Positionssignale PK, die an der aktuellen Relativposition zwischen Code 10 und Abtasteinheit 20 ein Codeelement C optimal auslesen. Hierzu ist der Codewort-Ermittlungseinheit 90 der Feinpositionswert FP zugeführt. Die Auswahl erfolgt, wie oben bereits beschrieben, über die beiden höherwertigen Bits des Feinpositionswerts FP.

Im beschriebenen Ausführungsbeispiel erfolgt die Ermittlung des Codeworts CW aus den Positionssignalen P zweistufig, indem zuerst in der Auswahleinheit 70 aus den Positionssignalen P korrigierte Positionssignale PK ausgewählt werden und aus diesen dann in der Codewort-Ermittlungseinheit 90 das Codewort CW ermittelt wird. In einer weiteren Ausführungsform sind die Auswahleinheit 70 und die Codewort-Ermittlungseinheit 90 in einer Schalteinheit 120 zusammengefasst. Die Ermittlung des Codeworts CW erfolgt nun dadurch, dass in der Korrektureinheit 80 zuerst anhand des Feinpositionswerts FP für jedes Bit des Codeworts CW das entsprechende Positionssignal P ohne Korrektur ermittelt wird und dass dann mittels Feinpositionswert FP und Korrekturinformation bestimmt wird, ob das ermittelte Positionssignal P zum Bilden des Bits des Codeworts geeignet ist, oder ob ein benachbartes Positionssignal P ausgewählt werden muss.

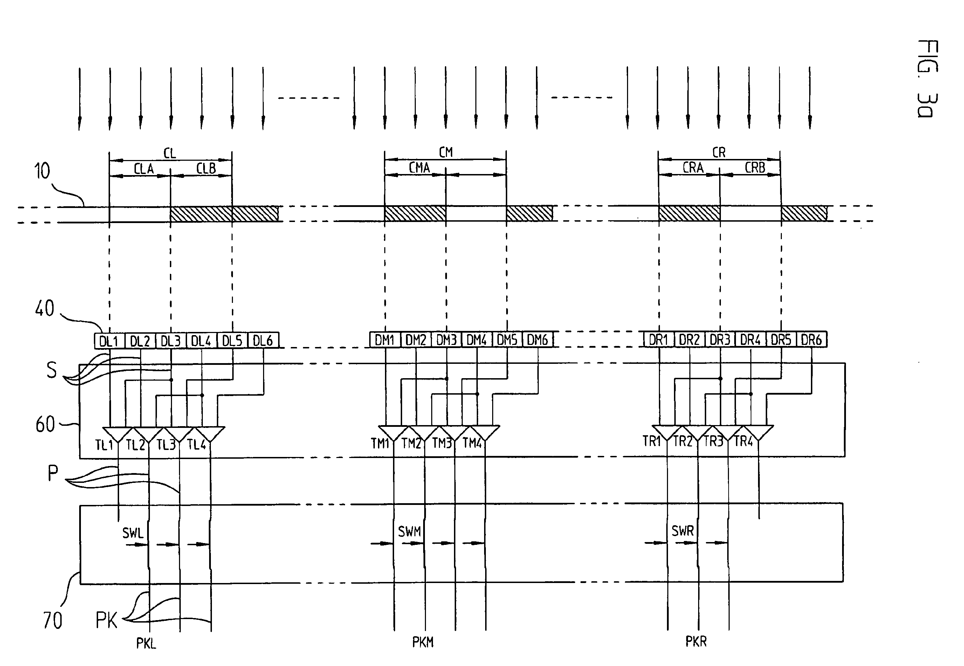

Anhand der Figuren 3a bis 3c soll nun die Auswahl der Detektorsignale in einer erfindungsgemäßen Positionsmesseinrichtung bei parallel, konvergent und divergent ausgerichtetem Licht weiter verdeutlicht werden. Die Figuren 3a bis 3c zeigen ausschnittsweise den Code 10, der auf die Detektoreinheit 40 abgebildet wird, die Signalverarbeitungseinheit 60 und die Auswahleinheit 70. Auf die Abbildung der Beleuchtungseinheit 30 wurde aus Gründen der Übersichtlichkeit verzichtet. Statt dessen ist die Ausrichtung des Lichts durch Pfeile angedeutet.

Vom Code 10 ist je ein linkes Codeelement CL, ein rechtes Codeelement CR und ein mittleres Codeelement CM dargestellt. Beim Code 10 handelt es sich um einen manchestercodierten PRC, daher besteht das linke Codeelement CL aus zwei Teilbereichen CLA und CLB, die auf linke Detektorelemente DL1 bis DL6 abgebildet werden, das rechte Codeelement CR aus zwei Teilbereichen CRA und CRB, die auf rechte Detektorelemente DR1 bis DR6 abgebildet werden und das mittlere Codeelement CM aus zwei Teilbereichen CMA und CMB, die auf mittlere Detektorelemente DM1 bis DM6 abgebildet werden. Je Teilbereich CLA, CLB; CRA, CRB; CMA, CMB sind zwei Detektorelemente D vorgesehen, somit weisen in Messrichtung X aufeinander folgende geradzahlig nummerierte Detektorelemente DL2, DL4, DL6; DR2, DR4, DR6; DM2, DM4, DM6, sowie in Messrichtung X aufeinander folgende ungeradzahlig nummerierte Detektorelemente DL1, DL3, DL5; DR1, DR3, DR5; DM1, DM3, DM5 den gleichen Abstand zueinander auf wie zwei in Messrichtung aufeinander folgend angeordnete Teilbereiche CLA, CLB; CRA, CRB; CMA, CMB der Codeelemente. Auf diese Weise ist in jeder Relativlage des Codes 10 zur Abtasteinheit 20 jedem Teilbereich CLA, CLB; CRA, CRB; CMA, CMB wenigstens ein Detektorelement eindeutig zugeordnet. Das bedeutet, an jeder Relativposition ist ein eindeutiges Codewort CW ermittelbar.

Die Detektorsignale S sind in der Signalverarbeitungseinheit 60 jeweils paarweise - entweder die Detektorsignale von zwei in Messrichtung aufeinander folgend angeordneten ungeradzahlig nummerierten oder von zwei in Messrichtung aufeinander folgend angeordneten geradzahlig nummerierten Detektoren - Triggerbausteinen zugeführt, die durch Differenzbildung und betragsmäßigem Vergleich mit einer Solldifferenz an ihren Ausgängen digitale Positionssignale P ausgeben, die drei Werte annehmen können: High-Signal entsprechend einer logischen "1", Low-Signal entsprechend einer logischen "0" oder ein Fehlersignal, wenn die Differenz der Detektorsignale die Solldifferenz betragsmäßig unterschreitet. Durch die gewählte Anordnung ist gewährleistet, dass an jeder Relativposition jedes Codeelement C von wenigstens einem Detektorpaar optimal ausgelesen wird.

Die Positionssignale P sind der Auswahleinheit 70 zugeführt, die Schaltelemente SW umfasst, mittels derer aus den Positionssignalen P korrigierte Positionssignale PK auswählbar sind.

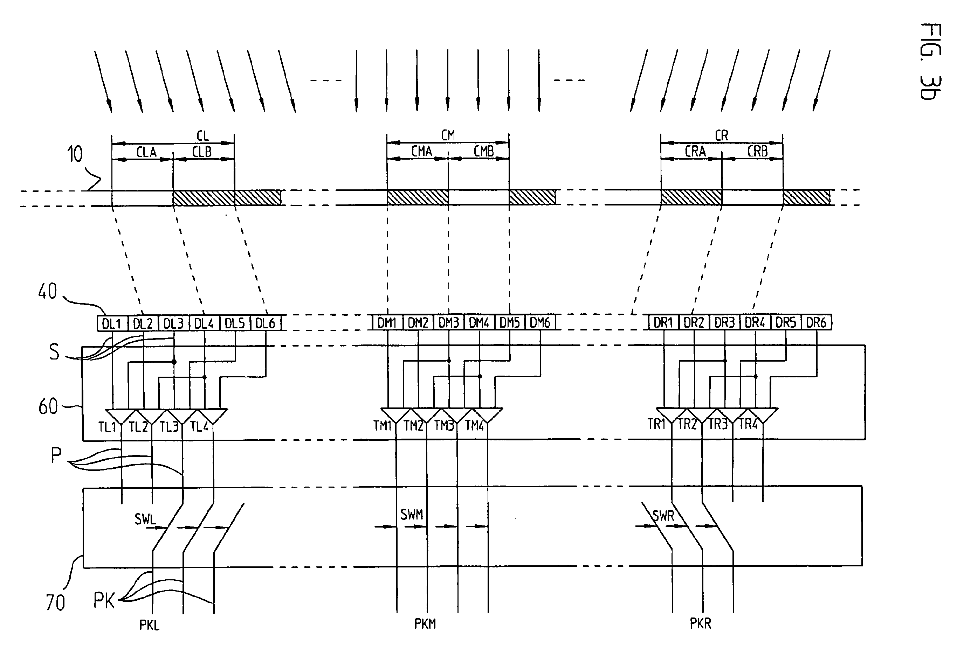

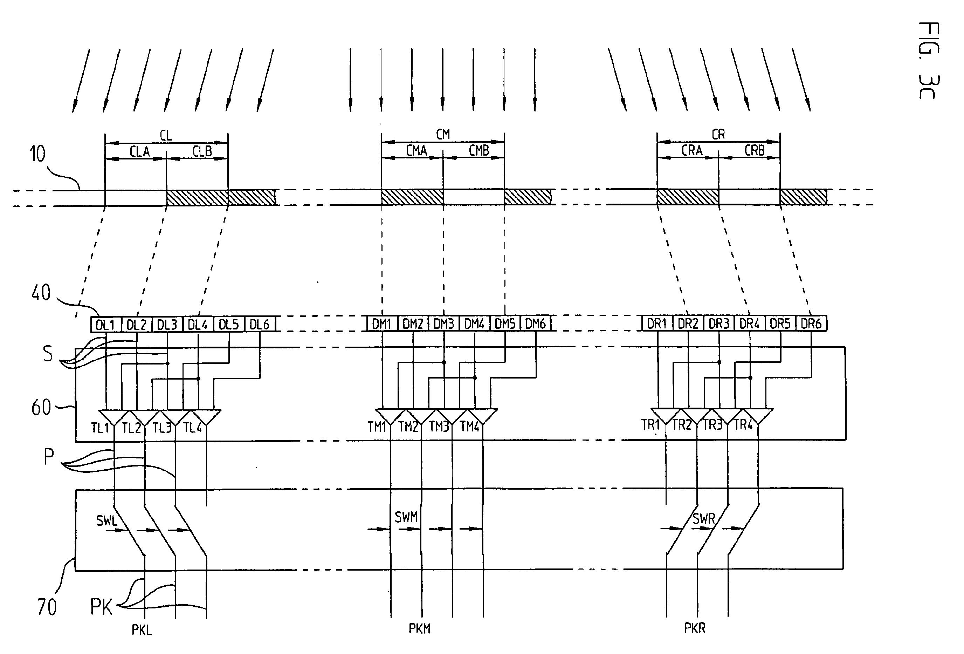

Die Funktion der Auswahleinheit 70 wird in den Figuren 3a, 3b, 3c lediglich anhand eines linken korrigierten Positionssignals PKL, eines rechten korrigierten Positionssignals PKR und eines mittleren korrigierten Positionssignals PKM beschrieben, wobei die Auswahl mittels eines linken Schaltelements SWL, eines mittleren Schaltelements SWM und eines rechten Schaltelements SWR erfolgt. Weitere Schaltelemente SW für benachbarte korrigierte Positionssignale PK sind jeweils angedeutet, werden aber nicht weiter beschrieben. Für den Fachmann ist es jedoch offensichtlich, dass diese Beschreibung auf alle weiteren korrigierten Positionssignale PK anwendbar ist.

In Figur 3a ist das von der Beleuchtungseinheit 30 zur Abbildung des Codes 10 auf die Detektoreinheit 40 ausgesendete Licht weitgehend parallel ausgerichtet. Bei der beschriebenen Positionsmesseinrichtung entspricht dies der Sollausrichtung des Lichts, die zu einer optimalen Abbildung des Codes 10 auf die Detektoreinheit 40 führt. In der dargestellten Relativposition zwischen Code 10 und Detektoreinheit 40 sind auf der linken Seite der Detektoreinheit 40 die Detektorelemente DL2 und DL4 optimal zum Auslesen der Positionsinformation des Codeelements CL positioniert. Entsprechend schaltet die Korrektureinheit 80 (nicht dargestellt) ein dem linken korrigierten Positionssignal PKL zugeordnetes linkes Schaltelement SWL, so dass das vom Triggerbaustein TL2 ausgegebene Positionssignal mit dem Ausgang des linken korrigierten Positionssignals PKL verbunden ist. Entsprechend schaltet ein rechtes Schaltelement SWR den Ausgang des Triggerbausteins TR2 zum Ausgang des rechten korrigierten Positionssignals PKR und ein mittleres Schaltelement SWM den Ausgang des Triggerbausteins TM2 zum Ausgang des mittleren korrigierten Positionssignals PKM.

In Figur 3b dagegen weist das Licht von der Beleuchtungseinheit 30 einen weitgehend konvergenten Strahlengang auf. Folge davon ist eine veränderte Abbildung des Codes 10 auf die Detektoreinheit 40, so dass bei gleicher Relativposition nun auf der linken Seite der Detektoreinheit 40 zum Auslesen der Positionsinformation des Codeelements CL die Detektorelemente DL3 und DL5 besonders gut geeignet sind, auf der rechten Seite die Detektorelemente DR1 und DR3 zum Auslesen der Positionsinformation des Codeelements CR und in der Mitte, da die Ausrichtung des Lichts hier weitgehend unverändert ist, weiterhin die Detektorelemente DM2 und DM4 zum Auslesen der Positionsinformation des Codeelements CM. Um ein sicheres Auslesen zu gewährleisten, schaltet die Korrektureinheit 80 (nicht dargestellt) das linke Schaltelement SWL so, dass nun der Ausgang des Triggerbausteins TL3 zum linken korrigierten Positionssignal PKL geschaltet ist und das rechte Schaltelement SWR so, dass der Ausgang des Triggerbausteins TR1 zum rechten korrigierten Positionssignal PKR. Die Stellung des Schaltelements SWM bleibt unverändert.

In Figur 3c schließlich ist das Licht von der Beleuchtungseinheit 30 weitgehend divergent ausgerichtet. Das bedeutet, bei gleicher Relativposition von Detektoreinheit 40 und Code 10 sind nun auf der linken Seite der Detektoreinheit 40 die Detektorelemente DL1 und DL3 optimal beleuchtet, bzw. komplett abgeschattet, während die Detektorelemente DL2 und DL4 bereits nur noch teilweise abgeschattet, bzw. teilweise beleuchtet sind. Dementsprechend sind auf der rechten Seite der Detektoreinheit 40 nun die Detektorelemente DR3 und DR5 für die Bestimmung der Positionsinformation auszuwählen. Hierfür ist es ggf. erforderlich, die Detektoreinheit 40 um weitere Detektorelemente D zu ergänzen. Auch in diesem Fall bleibt die Stellung des Schaltelements SWM unverändert.

Im beschriebenen Ausführungsbeispiel ist die Auswahleinheit 70 zwischen der Signalverarbeitungseinheit 60 und der Codewort-Ermittlungseinheit 90 angeordnet. Die Auswahl, welche Detektorsignale S für die Ermittlung des Codeworts CW verwendet werden, wird somit aus den in der Signalverarbeitungseinheit 40 aus Paaren von Detektorsignalen S erzeugten digitalen Positionssignalen P getroffen. Die Auswahleinheit 70 kann aber auch an anderer Stelle im Verarbeitungsprozess der Detektorsignale S zum Codewort CW positioniert sein, insbesondere zwischen der Detektoreinheit 40 und der Signalverarbeitungseinheit 60. In diesem Fall sind die Detektorsignale S, die für die Ermittlung des Codeworts CW verwendet werden, direkt auswählbar.

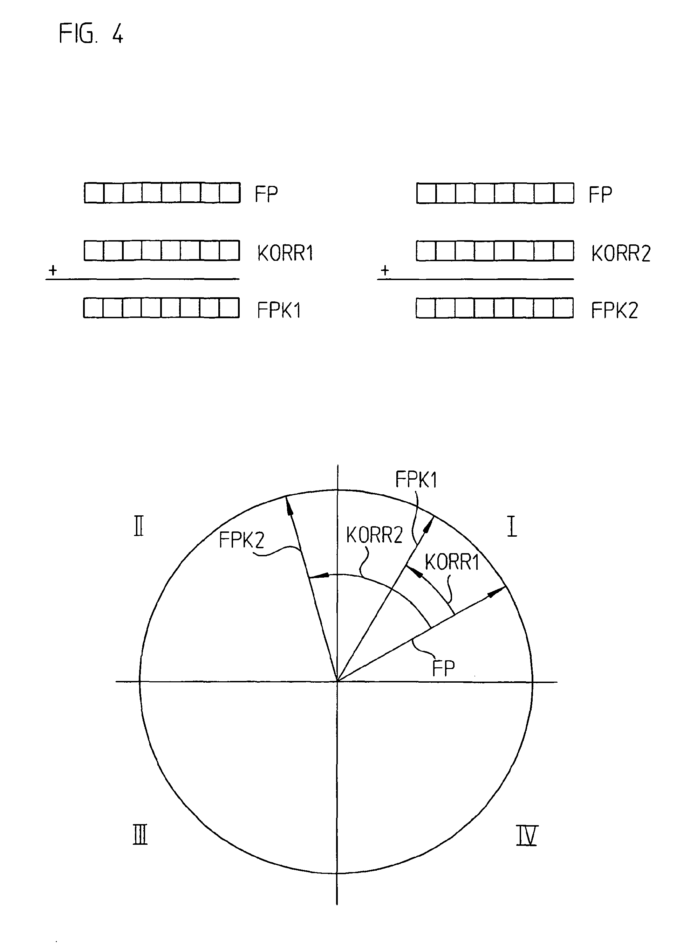

Figur 4 verdeutlicht noch einmal, wie die Auswahl der korrigierten Positionssignale PK, bzw. der einzelnen Bits des Codeworts CW aus den Positionssignalen P erfolgt. Hierzu ist der Feinpositionswert FP, der in diesem Beispiel eine Breite von 8 Bit aufweist, in einem Zeigerdiagramm dargestellt. Bei einer Relativbewegung der Abtasteinheit 20 und dem Code 10 in Messrichtung X durchläuft der Zeiger des Feinpositionswerts FP nacheinander die vier Quadranten des Diagramms, entsprechend den vier Detektorpaaren, die nacheinander optimal zum Auslesen eines Codeelements C positioniert sind. In welchem der vier Quadranten sich der Zeiger befindet, wird durch die zwei höherwertigen Bits des Feinpositionswerts FP bestimmt.

Die Korrektureinheit 80 ermittelt nun aus der in der Speichereinheit 100 abgelegten statischen oder positionsabhängigen Zuordnungsinformation und gegebenenfalls der vom Temperatursensor 110 abgeleiteten temperaturabhängigen Zuordnungsinformation eine Korrekturinformation KORR1, bzw. KORR2, die beispielsweise ebenfalls aus 8 Bit Worten besteht. Um festzustellen, ob an der aktuellen Position die Zuordnung der korrigierten Positionssignale PK zu den Positionssignalen P für die Ermittlung der einzelnen Bits des Codeworts CW, wie in Figur 3a gezeigt, stimmt, oder ob entsprechend der Figuren 3b und 3c eine Korrektur erforderlich ist, addiert die Korrektureinheit 80 die Korrekturinformation KORR1, KORR2 zum Feinpositionswert FP und erhält so korrigierte Feinpositionswerte FPK1, bzw. FPK2. Bleiben hierbei, wie bei der Addition einer ersten Korrekturinformation KORR1 zum Feinpositionswert FP, die zwei höherwertigen Bits gleich, so ist keine Korrektur erforderlich, da sich die Zeiger des Feinpositionswerts FP und des resultierenden ersten korrigierten Feinpositionswerts FPK1 im gleichen Quadranten befinden. Ändert sich dagegen, wie bei der Addition einer zweiten Korrekturinformation KORR2 zum Feinpositionswert FP, wenigstens eines der zwei höherwertigen Bits, so muss korrigiert werden, da sich die Zeiger des Feinpositionswerts FP und des resultierenden zweiten korrigierten Feinpositionswerts FPK2 in unterschiedlichen Quadranten befinden.

In welcher Form das Codewort CW ausgegeben wird, ist für die vorliegende Erfindung nicht relevant. So kann die Ausgabe sowohl, wie dargestellt, parallel, als auch seriell erfolgen. Ebenso können zur Ausgabe des Ergebnisses, beispielsweise an eine Werkzeugmaschinensteuerung, noch weitere Bausteine in der Abtasteinheit 20 enthalten sein.

Mit Vorteil ist die Abtasteinheit 20, insbesondere die Detektoreinheit 40 und die Auswerteeinheit 50, ganz oder teilweise als hochintegrierter, anwenderspezifischer Baustein (ASIC) ausgeführt.

Die absolute Positionsmesseinrichtung kann zur Messung von linearen oder rotatorischen Bewegungen eingesetzt werden, wobei der Code 10 an einem der zueinander beweglichen Objekte und die Abtasteinheit 20 am anderen der zu messenden Objekte angebracht ist. Der Code 10 kann dabei direkt an dem zu messenden Objekt angebracht sein oder auf einem Maßstab, der dann wiederum mit dem zu messenden Objekt gekoppelt ist.

Die zu messenden Objekte können dabei der Tisch und der Schlitten einer Werkzeug- oder einer Koordinatenmessmaschine sein oder auch der Rotor und der Stator eines Elektromotors.

## Patentansprüche

1. Positionsmesseinrichtung mit
- einem Code (10), bestehend aus einer Folge von in einer Messrichtung (X) hintereinander angeordneten Codeelementen (C, CL, CR, CM), bei dem wenigstens zwei aufeinander folgende Codeelemente (C, CL, CR, CM) jeweils ein Codewort (CW) mit einer Positionsinformation bilden,
- einer Abtasteinheit (20), umfassend eine Beleuchtungseinheit (30) zum Aussenden von gerichtetem Licht in Richtung des Codes (10) zur Abbildung wenigstens der Codewort (CW) bildenden Codeelemente (C, CL, CR, CM) auf eine Detektoreinheit (40), wobei die Detektoreinheit (40) in Messrichtung (X) wenigstens zwei Detektorelemente (D; DL1-DL6; DR1-DR6; DM1-DM6) je Codewort (CW) bildendem Codeelement (C, CL, CR, CM) aufweist, sowie eine Auswerteeinheit (50), in der aus den Detektorsignalen (S) der Detektorelemente (D; DL1-DL6; DR1-DR6; DM1-DM6) das Codewort (CW) mit der aktuellen Positionsinformation ermittelbar ist, wobei die Abtasteinheit (20) und der Code (10) in Messrichtung (X) relativ zueinander beweglich angeordnet sind,
**dadurch gekennzeichnet, dass**
in der Auswerteeinheit (50) die zur Bildung des Codeworts (CW) auszuwertenden Detektorsignale (S) in Abhängigkeit von der Abbildung der Codewort (CW) bildenden Codeelemente (C, CL, CR, CM) auf die Detektoreinheit (40) auswählbar sind, wobei
- die Auswerteeinheit (50) eine Signalverarbeitungseinheit (60) umfasst, der die Detektorsignale (S) zugeführt sind und in der Signalverarbeitungseinheit (60) aus den Detektorsignalen (S) digitale Positionssignale (P) generierbar sind und
- die Auswerteeinheit (50) Mittel zur Bildung des Codeworts (CW) durch Auswahl von Positionssignalen (P) anhand einer Korrekturinformation (KORR1, KORR2) und eines Feinpositionswerts (FP) umfasst und
wobei die Korrekturinformation (KORR1, KORR2) eine Zuordnungsinformation umfasst, die die Abbildung des Codes (10) auf die Detektoreinheit (40) berücksichtigt.

2. Positionsmesseinrichtung nach Anspruch 1, wobei die Codeelemente (C, CL, CR, CM) aus zwei in Messrichtung (X) aufeinander folgenden Teilbereichen (CA, CB; CLA, CLB; CRA, CRB; CMA, CMB) bestehen, die zueinander komplementäre Eigenschaften aufweisen und dass je Teilbereich (CA, CB; CLA, CLB; CRA, CRB; CMA, CMB) wenigstens zwei Detektorelemente (D; DL1-DL6; DR1-DR6; DM1-DM6) vorgesehen sind.

3. Positionsmesseinrichtung nach Anspruch 2, wobei die Signalverarbeitungseinheit (60) Triggerbausteine (TL1-TL4; TR1-TR4; TM1-TM4) umfasst, denen je zwei Detektorsignale (S) von Detektoren (D; DL1-DL6; DR1-DR6; DM1-DM6) zugeführt sind, die in Messrichtung (X) den gleichen Abstand aufweisen, wie zwei in Messrichtung (X) aufeinander folgend angeordnete Teilbereiche (CA, CB; CLA, CLB; CRA, CRB; CMA, CMB) und die Triggerbausteine (TL1-TL4; TR1-TR4; TM1-TM4) durch Differenzbildung aus den Detektorsignalen (S) die digitalen Positionssignale (P) generieren.

4. Positionsmesseinrichtung nach einem der vorhergehenden Ansprüche, wobei die digitalen Positionssignale (P) einer Auswahleinheit (70) zugeführt sind, die korrigierte Positionssignale (PK) ausgibt, wobei die Auswahl der korrigierten Positionssignale (PK) aus den Positionssignalen (P) von einer Korrektureinheit (80) anhand der Korrekturinformation (KORR1, KORR2) und des Feinpositionswerts (FP) bestimmt ist.

5. Positionsmesseinrichtung nach einem der vorhergehenden Ansprüche, wobei die Korrekturinformation (KORR1, KORR2) eine statische Zuordnungsinformation umfasst.

6. Positionsmesseinrichtung nach einem der vorhergehenden Ansprüche, wobei die Korrekturinformation (KORR1, KORR2) eine positionsabhängige Zuordnungsinformation umfasst.

7. Positionsmesseinrichtung nach einem der vorhergehenden Ansprüche, wobei die Auswerteeinheit (50) weiter eine Speichereinheit (100) umfasst, in der Zuordnungsinformationen speicherbar sind.

8. Positionsmesseinrichtung nach einem der vorhergehenden Ansprüche, wobei die Auswerteeinheit (50) weiter wenigstens einen Temperatursensor (110) enthält und dass die Korrekturinformation (KORR1, KORR2) weiter eine temperaturabhängige Zuordnungsinformation umfasst.

9. Positionsmesseinrichtung nach einem der Ansprüche 4 bis 8, wobei die Auswerteeinheit (50) weiter eine Codewort-Ermittlungseinheit (90) umfasst, der die korrigierten Positionssignale (PK), sowie der Feinpositionswert (FP) zur Bildung des Codeworts (CW) zugeführt sind.

10. Positionsmesseinrichtung nach Anspruch 9, wobei die Ermittlung des Codeworts (CW) aus den korrigierten Positionssignalen (PK) anhand der höherwertigen Bits des Feinpositionswerts (FP) erfolgt.

11. Positionsmesseinrichtung nach einem der vorhergehenden Ansprüche, wobei der Feinpositionswert (FP) durch Auswertung einer parallel zum Code (10) verlaufenden Inkrementalspur (200) ermittelbar ist.

12. Verfahren zur absoluten Positionsmessung mit einer Positionsmesseinrichtung mit
- einem Code (10), bestehend aus einer Folge von in einer Messrichtung (X) hintereinander angeordneten Codeelementen (C, CL, CR, CM), bei dem wenigstens zwei aufeinander folgende Codeelemente (C, CL, CR, CM) jeweils ein Codewort (CW) mit einer Positionsinformation bilden,
- einer Abtasteinheit (20), umfassend eine Beleuchtungseinheit (30) zum Aussenden von gerichtetem Licht in Richtung des Codes (10) zur Abbildung wenigstens der Codewort (CW) bildenden Codeelemente (C, CL, CR, CM) auf eine Detektoreinheit (40), wobei die Detektoreinheit (40) in Messrichtung (X) wenigstens zwei Detektorelemente (D; DL1-DL6; DR1-DR6; DM1-DM6) je Codewort (CW) bildendem Codeelement (C, CL, CR, CM) aufweist, sowie eine Auswerteeinheit (50), in der aus den Detektorsignalen (S) der Detektorelemente (D; DL1-DL6; DR1-DR6; DM1-DM6) das Codewort (CW) mit der aktuellen Positionsinformation ermittelt wird, wobei die Abtasteinheit (20) und der Code (10) in Messrichtung (X) relativ zueinander beweglich angeordnet sind,
**dadurch gekennzeichnet, dass**
in der Auswerteeinheit (50) die zur Bildung des Codeworts (CVII) auszuwertenden Detektorsignale (S) in Abhängigkeit von der Abbildung der Codewort (CW) bildenden Codeelemente (C, CL, CR, CM) auf die Detektoreinheit (40) ausgewählt werden, wobei
- die Auswerteeinheit (50) eine Signalverarbeitungseinheit (60) umfasst, der die Detektorsignale (S) zugeführt sind und in der Signalverarbeitungseinheit (60) aus den Detektorsignalen (S) digitale Positionssignale (P) generiert werden und
- die Auswerteeinheit (50) Mittel zur Bildung des Codeworts (CW) durch Auswahl von Positionssignalen (P) anhand einer Korrekturinformation (KORR1, KORR2) und eines Feinpositionswerts (FP) umfasst und
wobei die Korrekturinformation (KORR1, KORR2) eine Zuordnungsinformation umfasst, die die Abbildung des Codes (10) auf die Detektoreinheit (40) berücksichtigt.

13. Verfahren nach Anspruch 12, wobei die Codeelemente (C, CL, CR, CM) aus zwei in Messrichtung (X) aufeinander folgenden Teilbereichen (CA, CB; CLA, CLB; CRA, CRB; CMA, CMB) bestehen, die zueinander komplementäre Eigenschaften aufweisen, dass je Teilbereich (CA, CB; CLA, CLB; CRA, CRB; CMA, CMB) wenigstens zwei Detektorelemente (D; DL1-DL6; DR1-DR6; DM1-DM6) vorgesehen sind, dass die Signalverarbeitungseinheit (60) Triggerbausteine (TL1-TL4; TR1-TR4; TM1-TM4) umfasst, denen je zwei Detektorsignale (S) von Detektoren (D; DL1-DL6; DR1-DR6; DM1-DM6) zugeführt sind, die in Messrichtung (X) den gleichen Abstand aufweisen, wie zwei in Messrichtung (X) aufeinander folgend angeordnete Teilbereiche (CA, CB; CLA, CLB; CRA, CRB; CMA, CMB) und die Triggerbausteine (TL1-TL4; TR1-TR4; TM1-TM4) durch Differenzbildung aus den Detektorsignalen (S) digitale Positionssignale (P) generieren.

14. Verfahren nach einem der Ansprüche 12 oder 13, wobei die digitalen Positionssignale (P) einer Auswahleinheit (70) zugeführt sind, die korrigierte Positionssignale (PK) ausgibt, wobei die Auswahl der korrigierten Positionssignale (PK) aus den Positionssignalen (P) von einer Korrektureinheit (80) anhand der Korrekturinformation (KORR1, KORR2) und des Feinpositionswerts (FP) bestimmt wird.

15. Verfahren nach einem der Ansprüche 12 bis 14, wobei die Korrekturinformation (KORR1, KORR2) eine statische Zuordnungsinformation umfasst.

16. Verfahren nach einem der Ansprüche 12 bis 15, wobei die Korrekturinformation (KORR1, KORR2) eine positionsabhängige Zuordnungsinformation umfasst.

17. Verfahren nach einem der Ansprüche 12 bis 16, wobei die Auswerteeinheit (50) weiter wenigstens einen Temperatursensor (110) enthält und dass die Korrekturinformation (KORR1, KORR2) weiter eine temperaturabhängige Zuordnungsinformation umfasst.

18. Verfahren nach einem der Ansprüche 12 bis 17, wobei die Auswerteeinheit (50) weiter eine Codewort-Ermittlungseinheit (90) umfasst, der zur Bildung des Codeworts (CW) die korrigierten Positionssignale (PK), sowie der Feinpositionswert (FP) zugeführt sind.

19. Verfahren nach Anspruch 18, wobei die Ermittlung des Codeworts (CW) aus den korrigierten Positionssignalen (PK) anhand der höherwertigen Bits des Feinpositionswerts (FP) erfolgt.

## Claims

1. Position measuring device having
- a code (10), consisting of a series of code elements (C, CL, CR, CM) arranged successively in a direction of measurement (X), in which at least two successive code elements (C, CL, CR, CM) form a respective code word (CW) with a position information item,
- a scanning unit (20), comprising an illumination unit (30) for emitting directional light in the direction of the code (10) for the purpose of mapping at least the code elements (C, CL, CR, CM) that form a code word (CW) onto a detector unit (40), wherein the detector unit (40) has at least two detector elements (D; DL1-DL6; DR1-DR6; DM1-DM6) per code element (C, CL, CR, CM) that forms a code word (CW) in the direction of measurement (X), and also an evaluation unit (50) in which the code word (CW) with the current position information item can be ascertained from the detector signals (S) of the detector elements (D; DL1-DL6; DR1-DR6; DM1-DM6), wherein the scanning unit (20) and the code (10) are arranged so as to be mobile relative to one another in the direction of measurement (X),
**characterized in that**
the detector signals (S) that can be evaluated to form the code word (CW) can be selected in the evaluation unit (50) on the basis of the mapping of the code elements (C, CL, CR, CM) that form a code word (CW) onto the detector unit (40), wherein
- the evaluation unit (50) comprises a signal processing unit (60) to which the detector signals (S) are supplied, and digital position signals (P) can be generated from the detector signals (S) in the signal processing unit (60), and
- the evaluation unit (50) comprises means for forming the code word (CW) by selecting position signals (P) on the basis of a correction information item (KORR1, KORR2) and a fine position value (FP), and
wherein the correction information item (KORR1, KORR2) comprises an association information item that takes account of the mapping of the code (10) onto the detector unit (40).

2. Position measuring device according to Claim 1, wherein the code elements (C, CL, CR, CM) consist of two sub-regions (CA, CB; CLA, CLB; CRA, CRB; CMA, CMB) that are successive in the direction of measurement (X) and that have mutually complementary properties and wherein at least two detector elements (D; DL1-DL6; DR1-DR6; DM1-DM6) are provided per sub-region (CA, CB; CLA, CLB; CRA, CRB; CMA, CMB).

3. Position measuring device according to Claim 2, wherein the signal processing unit (60) comprises trigger modules (TL1-TL4; TR1-TR4; TM1-TM4) to which two respective detector signals (S) are supplied from detectors (D; DL1-DL6; DR1-DR6; DM1-DM6) that are at the same interval in the direction of measurement (X) as two sub-regions (CA, CB; CLA, CLB; CRA, CRB; CMA, CMB) arranged successively in the direction of measurement (X), and the trigger modules (TL1-TL4; TR1-TR4; TM1-TM4) generate the digital position signals (P) from the detector signals (S) by means of difference formation.

4. Position measuring device according to one of the preceding claims, wherein the digital position signals (P) are supplied to a selection unit (70) that outputs corrected position signals (PK), wherein the selection of the corrected position signals (PK) from the position signals (P) is determined by a correction unit (80) on the basis of the correction information item (KORR1, KORR2) and the fine position value (FP).

5. Position measuring device according to one of the preceding claims, wherein the correction information item (KORR1, KORR2) comprises a static association information item.

6. Position measuring device according to one of the preceding claims, wherein the correction information item (KORR1, KORR2) comprises a position-dependent association information item.

7. Position measuring device according to one of the preceding claims, wherein the evaluation unit (50) additionally comprises a memory unit (100) that can be used to store association information items.

8. Position measuring device according to one of the preceding claims, wherein the evaluation unit (50) additionally contains at least one temperature sensor (110) and wherein the correction information item (KORR1, KORR2) additionally comprises a temperature-dependent association information item.

9. Position measuring device according to one of Claims 4 to 8, wherein the evaluation unit (50) additionally comprises a code word ascertainment unit (90) to which the corrected position signals (PK) and also the fine position value (FP) are supplied for the purpose of forming the code word (CW).

10. Position measuring device according to Claim 9, wherein the code word (CW) is ascertained from the corrected position signals (PK) on the basis of the more significant bits of the fine position value (FP).

11. Position measuring device according to one of the preceding claims, wherein the fine position value (FP) can be ascertained by evaluating an incremental track (200) running parallel to the code (10).

12. Method for absolute position measurement with a position measuring device having
- a code (10), consisting of a series of code elements (C, CL, CR, CM) arranged successively in a direction of measurement (X), in which at least two successive code elements (C, CL, CR, CM) form a respective code word (CW) with a position information item,
- a scanning unit (20), comprising an illumination unit (30) for emitting directional light in the direction of the code (10) for the purpose of mapping at least the code elements (C, CL, CR, CM) that form a code word (CW) onto a detector unit (40), wherein the detector unit (40) has at least two detector elements (D; DL1-DL6; DR1-DR6; DM1-DM6) per code element (C, CL, CR, CM) that forms a code word (CW) in the direction of measurement (X), and also an evaluation unit (50) in which the code word (CW) with the current position information item is ascertained from the detector signals (S) of the detector elements (D; DL1-DL6; DR1-DR6; DM1-DM6), wherein the scanning unit (20) and the code (10) are arranged so as to be mobile relative to one another in the direction of measurement (X),
**characterized in that**
the detector signals (S) that can be evaluated to form the code word (CW) are selected in the evaluation unit (50) on the basis of the mapping of the code elements (C, CL, CR, CM) that form a code word (CW) onto the detector unit (40), wherein
- the evaluation unit (50) comprises a signal processing unit (60) to which the detector signals (S) are supplied, and digital position signals (P) are generated from the detector signals (S) in the signal processing unit (60), and
- the evaluation unit (50) comprises means for forming the code word (CW) by selecting position signals (P) on the basis of a correction information item (KORR1, KORR2) and a fine position value (FP), and
wherein the correction information item (KORR1, KORR2) comprises an association information item that takes account of the mapping of the code (10) onto the detector unit (40).

13. Method according to Claim 12, wherein the code elements (C, CL, CR, CM) consist of two sub-regions (CA, CB; CLA, CLB; CRA, CRB; CMA, CMB) that are successive in the direction of measurement (X) and that have mutually complementary properties, wherein at least two detector elements (D; DL1-DL6; DR1-DR6; DM1-DM6) are provided per sub-region (CA, CB; CLA, CLB; CRA, CRB; CMA, CMB), wherein the signal processing unit (60) comprises trigger modules (TL1-TL4; TR1-TR4; TM1-TM4) to which two respective detector signals (S) are supplied from detectors (D; DL1-DL6; DR1-DR6; DM1-DM6) that are at the same interval in the direction of measurement (X) as two sub-regions (CA, CB; CLA, CLB; CRA, CRB; CMA, CMB) arranged successively in the direction of measurement (X), and the trigger modules (TL1-TL4; TR1-TR4; TM1-TM4) generate digital position signals (P) from the detector signals (S) by means of difference formation.

14. Method according to either of Claims 12 and 13, wherein the digital position signals (P) are supplied to a selection unit (70) that outputs corrected position signals (PK), wherein the selection of the corrected position signals (PK) from the position signals (P) is determined by a correction unit (80) on the basis of the correction information item (KORR1, KORR2) and the fine position value (FP).

15. Method according to one of Claims 12 to 14, wherein the correction information item (KORR1, KORR2) comprises a static association information item.

16. Method according to one of Claims 12 to 15, wherein the correction information item (KORR1, KORR2) comprises a position-dependent association information item.

17. Method according to one of Claims 12 to 16, wherein the evaluation unit (50) additionally contains at least one temperature sensor (110) and wherein the correction information item (KORR1, KORR2) additionally comprises a temperature-dependent association information item.

18. Method according to one of Claims 12 to 17, wherein the evaluation unit (50) additionally comprises a code word ascertainment unit (90) to which, for the purpose of forming the code word (CW), the corrected position signals (PK) and also the fine position value (FP) are supplied.

19. Method according to Claim 18, wherein the code word (CW) is ascertained from the corrected position signals (PK) on the basis of the more significant bits of the fine position value (FP).

## Revendications

1. Dispositif de mesure de position comprenant
- un code (10), composé d'une séquence d'éléments de code (C, CL, CR, CM) disposés les uns derrière les autres dans une direction de mesure (X), avec lequel au moins deux éléments de code (C, CL, CR, CM) successifs forment respectivement un mot de code (CW) avec une information de position,
- une unité de palpage (20), comprenant une unité d'éclairage (30) destinée à émettre de la lumière dirigée en direction du code (10) en vue de représenter au moins les éléments de code (C, CL, CR, CM) formant un mot de code (CW) sur une unité de détection (40), l'unité de détection (40) possédant, dans la direction de la mesure (X), au moins deux éléments détecteurs (D ; DL1-DL6 ; DR1-DR6 ; DM1-DM6) par élément de code (C, CL, CR, CM) formant un mot de code (CW), ainsi qu'une unité d'interprétation (50) dans laquelle le mot de code (CW) avec l'information de position actuelle peut être déterminé à partir des signaux de détecteur (S) des éléments détecteurs (D ; DL1-DL6 ; DR1-DR6 ; DM1-DM6), l'unité de palpage (20) et le code (10) étant disposés avec mobilité mutuelle dans la direction de la mesure (X),
**caractérisé en ce que**
dans l'unité d'interprétation (50), les signaux de détecteur (S) à interpréter en vue de former le mot de code (CW) peuvent être sélectionnés en fonction de la représentation des éléments de code (C, CL, CR, CM) formant un mot de code (CW) sur l'unité de détection (40),
- l'unité d'interprétation (50) comprenant une unité de traitement de signal (60) à laquelle sont acheminés les signaux de détecteur (S) et des signaux de position (P) numériques pouvant être générés dans l'unité de traitement de signal (60) à partir des signaux de détecteur (S) et
- l'unité d'interprétation (50) comprenant des moyens pour former le mot de code (CW) en sélectionnant des signaux de position (P) à l'aide d'une information de correction (KORR1, KORR2) et d'une valeur de position précise (FP) et
l'information de correction (KORR1, KORR2) comprenant une information d'affectation qui tient compte de la représentation du code (10) sur l'unité de détection (40).

2. Dispositif de mesure de position selon la revendication 1, avec lequel les éléments de code (C, CL, CR, CM) se composent de deux zones partielles (CA, CB ; CLA, CLB ; CRA, CRB ; CMA, CMB) successives dans la direction de la mesure (X), lesquelles présentent des propriétés mutuellement complémentaires, et avec lequel au moins deux éléments détecteurs (D ; DL1-DL6 ; DR1-DR6 ; DM1-DM6) sont prévus pour chaque zone partielle (CA, CB ; CLA, CLB ; CRA, CRB ; CMA, CMB).

3. Dispositif de mesure de position selon la revendication 2, avec lequel l'unité de traitement de signal (60) comprend des composants de déclenchement (TL1-TL4 ; TR1-TR4 ; TM1-TM4) auxquels sont respectivement acheminés deux signaux de détecteur (S) depuis des détecteurs (D ; DL1-DL6 ; DR1-DR6 ; DM1-DM6), lesquels présentent, dans la direction de la mesure (X), le même écart que deux zones partielles (CA, CB ; CLA, CLB ; CRA, CRB ; CMA, CMB) qui sont disposées l'une à la suite de l'autre dans la direction de la mesure (X), et les composants de déclenchement (TL1-TL4 ; TR1-TR4 ; TM1-TM4) génèrent les signaux de position numériques (P) par calcul de la différence à partir des signaux de détecteur (S).

4. Dispositif de mesure de position selon l'une des revendications précédentes, avec lequel les signaux de position numériques (P) sont acheminés à une unité de sélection (70) qui émet des signaux de position corrigés (PK), la sélection des signaux de position corrigés (PK) à partir des signaux de position (P) étant définie par une unité de correction (80) au moyen de l'information de correction (KORR1, KORR2) et de la valeur de position précise (FP).

5. Dispositif de mesure de position selon l'une des revendications précédentes, avec lequel l'information de correction (KORR1, KORR2) comprend une information d'affectation statique.

6. Dispositif de mesure de position selon l'une des revendications précédentes, avec lequel l'information de correction (KORR1, KORR2) comprend une information d'affectation dépendante de la position.

7. Dispositif de mesure de position selon l'une des revendications précédentes, avec lequel l'unité d'interprétation (50) comprend en outre une unité à mémoire (100) dans laquelle peuvent être enregistrées des informations d'affectation.

8. Dispositif de mesure de position selon l'une des revendications précédentes, avec lequel l'unité d'interprétation (50) comprend en outre au moins une sonde de température (110) et avec lequel l'information de correction (KORR1, KORR2) comprend en outre une information d'affectation dépendante de la température.

9. Dispositif de mesure de position selon l'une des revendications 4 à 8, avec lequel l'unité d'interprétation (50) comprend en outre une unité de détermination de mot de code (90) à laquelle sont acheminés les signaux de position corrigés (PK) ainsi que la valeur de position précise (FP) en vue de former le mot de code (CW).

10. Dispositif de mesure de position selon la revendication 9, avec lequel la détermination du mot de code (CW) à partir des signaux de position corrigés (PK) s'effectue à l'aide des bits de poids fort de la valeur de position précise (FP).

11. Dispositif de mesure de position selon l'une des revendications précédentes, avec lequel la valeur de position précise (FP) peut être déterminée par interprétation d'une piste incrémentale (200) qui s'étend parallèlement au code (10).

12. Procédé de mesure de la position absolue avec un dispositif de mesure de position comprenant
- un code (10), composé d'une séquence d'éléments de code (C, CL, CR, CM) disposés les uns derrière les autres dans une direction de mesure (X), avec lequel au moins deux éléments de code (C, CL, CR, CM) successifs forment respectivement un mot de code (CW) avec une information de position,
- une unité de palpage (20), comprenant une unité d'éclairage (30) destinée à émettre de la lumière dirigée en direction du code (10) en vue de représenter au moins les éléments de code (C, CL, CR, CM) formant un mot de code (CW) sur une unité de détection (40), l'unité de détection (40) possédant, dans la direction de la mesure (X), au moins deux éléments détecteurs (D ; DL1-DL6 ; DR1-DR6 ; DM1-DM6) par élément de code (C, CL, CR, CM) formant un mot de code (CW), ainsi qu'une unité d'interprétation (50) dans laquelle le mot de code (CW) avec l'information de position actuelle est déterminé à partir des signaux de détecteur (S) des éléments détecteurs (D ; DL1-DL6 ; DR1-DR6 ; DM1-DM6), l'unité de palpage (20) et le code (10) étant disposés avec mobilité mutuelle dans la direction de la mesure (X),
**caractérisé en ce que**
dans l'unité d'interprétation (50), les signaux de détecteur (S) à interpréter en vue de former le mot de code (CW) sont sélectionnés en fonction de la représentation des éléments de code (C, CL, CR, CM) formant un mot de code (CW) sur l'unité de détection (40),
- l'unité d'interprétation (50) comprenant une unité de traitement de signal (60) à laquelle sont acheminés les signaux de détecteur (S) et des signaux de position (P) numériques étant générés dans l'unité de traitement de signal (60) à partir des signaux de détecteur (S) et
- l'unité d'interprétation (50) comprenant des moyens pour former le mot de code (CW) en sélectionnant des signaux de position (P) à l'aide d'une information de correction (KORR1, KORR2) et d'une valeur de position précise (FP) et
l'information de correction (KORR1, KORR2) comprenant une information d'affectation qui tient compte de la représentation du code (10) sur l'unité de détection (40).

13. Procédé selon la revendication 12, selon lequel les éléments de code (C, CL, CR, CM) se composent de deux zones partielles (CA, CB ; CLA, CLB ; CRA, CRB ; CMA, CMB) successives dans la direction de la mesure (X), lesquelles présentent des propriétés mutuellement complémentaires, selon lequel au moins deux éléments détecteurs (D ; DL1-DL6 ; DR1-DR6 ; DM1-DM6) sont prévus pour chaque zone partielle (CA, CB ; CLA, CLB ; CRA, CRB ; CMA, CMB), selon lequel l'unité de traitement de signal (60) comprend des composants de déclenchement (TL1-TL4 ; TR1-TR4 ; TM1-TM4) auxquels sont respectivement acheminés deux signaux de détecteur (S) depuis des détecteurs (D ; DL1-DL6 ; DR1-DR6 ; DM1-DM6), lesquels présentent, dans la direction de la mesure (X), le même écart que deux zones partielles (CA, CB ; CLA, CLB ; CRA, CRB ; CMA, CMB) qui sont disposées l'une à la suite de l'autre dans la direction de la mesure (X), et les composants de déclenchement (TL1-TL4 ; TR1-TR4 ; TM1-TM4) génèrent des signaux de position numériques (P) par calcul de la différence à partir des signaux de détecteur (S).

14. Procédé selon l'une des revendications 12 ou 13, selon lequel les signaux de position numériques (P) sont acheminés à une unité de sélection (70) qui émet des signaux de position corrigés (PK), la sélection des signaux de position corrigés (PK) à partir des signaux de position (P) étant définie par une unité de correction (80) au moyen de l'information de correction (KORR1, KORR2) et de la valeur de position précise (FP).

15. Procédé selon l'une des revendications 12 à 14, selon lequel l'information de correction (KORR1, KORR2) comprend une information d'affectation statique.

16. Procédé selon l'une des revendications 12 à 15, selon lequel l'information de correction (KORR1, KORR2) comprend une information d'affectation dépendante de la position.

17. Procédé selon l'une des revendications 12 à 16, selon lequel l'unité d'interprétation (50) comprend en outre au moins une sonde de température (110) et selon lequel l'information de correction (KORR1, KORR2) comprend en outre une information d'affectation dépendante de la température.

18. Procédé selon l'une des revendications 12 à 17, selon lequel l'unité d'interprétation (50) comprend en outre une unité de détermination de mot de code (90) à laquelle sont acheminés les signaux de position corrigés (PK) ainsi que la valeur de position précise (FP) en vue de former le mot de code (CW).

19. Procédé selon la revendication 18, selon lequel la détermination du mot de code (CW) à partir des signaux de position corrigés (PK) s'effectue à l'aide des bits de poids fort de la valeur de position précise (FP).
